# EUROPÄISCHE PATENTSCHRIFT

(11) **EP 1 940 656 B1**
(45) Veröffentlichungstag und Bekanntmachung des Hinweises auf die Patenterteilung: **28.04.2010**
(21) Anmeldenummer: 07821984.7
(22) Anmeldetag: 29.10.2007
(51) Int. Cl.: B60R 21/215

(54) **AIRBAGMODUL FÜR EIN KRAFTFAHRZEUG**
AIRBAG MODULE FOR A MOTOR VEHICLE
MODULE D'AIRBAG POUR UN VÉHICULE AUTOMOBILE

(30) Priorität: 02.11.2006 DE 102006052190
(43) Veröffentlichungstag der Anmeldung: 09.07.2008
(73) Patentinhaber: Takata-Petri AG, 63743 Aschaffenburg (DE)
(72) Erfinder: MEISSNER, Dirk, 13467 Berlin (DE); SCHREIBER, Christian, 16356 Ahrensfelde (DE); PRADEL, Andreas, 10318 Berlin (DE); ABE, Kazuhiro, Chennai (IN)
(74) Vertreter: Baumgärtel, Gunnar
(86) Internationale Anmeldenummer: PCT/EP2007/061629
(87) Internationale Veröffentlichungsnummer: WO 2008/052968

(56) Entgegenhaltungen:
- EP-A- 1 449 723
- DE-A1- 19 648 136
- DE-U1- 29 606 322

## Beschreibung

Die Erfindung betrifft ein Airbagmodul für ein Kraftfahrzeug nach dem Oberbegriff des Anspruchs 1.

Das Airbagmodul umfasst einen als Gassackpaket vorgesehenen und mittels eines Gasgenerators zum Schutz eines auf einem Sitzplatz des Kraftfahrzeugs befindlichen Fahrzeuginsassen aufblasbaren Gassack, der eine einen (mit Gas befüllbaren) Innenraum des Gassacks umschließende Hülle (Gassackhülle) aufweist; eine Aufnahme des Airbagmodules (Modulaufnahme), in der' der Gassack als Gassackpaket untergebracht ist; eine Deckfläche des Airbagmodules, welche bei bestimmungsgemäßem Einbau des Airbagmodules in ein Kraftfahrzeug so im Kraftfahrzeug angeordnet ist, dass die Deckfläche dem besagten Sitzplatz des Kraftfahrzeugs zugeordnet ist; sowie eine sich entlang der Deckfläche erstreckende Abdeckung des Airbagmodules, die eine dem Sitzplatz zugewandte äußere Oberfläche und eine dem Innenraum der Modulaufnahme zugewandte innere Oberfläche aufweist.

Unter einem "Sitzplatz" wird dabei vorliegend nicht ein Kraftfahrzeugsitz verstanden, sondern derjenige Teil des Kraftfahrzeuginnenraums, der von einem Kraftfahrzeuginsassen eingenommen wird, der sich ordnungsgemäß (auf einem bestimmten Sitz) innerhalb des Kraftfahrzeugs aufhält und der mittels des Airbagmodules in einem Crash-Fall geschützt werden soll.

Ein solches Airbagmodul ist beispielsweise aus der DE 196 48 136 bekannt.

Bei dem bekannten Airbagmodul besteht das Problem, dass in einem Crash-Fall zunächst die Abdeckung des Airbagmodules geöffnet werden muss, bevor sich der in der Modulaufnahme als Gassackpaket verstaute Gassack durch die zuvor von der Abdeckung verschlossene Deckfläche des Airbagmodules hindurch in den Fahrzeuginnenraum entfalten kann. Dies geschieht in der Regel dadurch, dass der in der Modulaufnahme angeordnete Gassack beim Befüllen mit Gas mittels des zugeordneten Gasgenerators expandiert und hierbei derart gegen die Abdeckung drückt, dass diese - entlang hierfür vorgesehener Sollbruch- oder Aufreißlinien - aufreißt und dann die Öffnung in der Deckfläche des Airbagmodules freigibt. Der Gassack kann sich dann durch diese Öffnung hindurch, welche ja auf den zu schützenden Fahrzeuginsassen bzw. den hiermit identifizierten Sitzplatz gerichtet ist, in Richtung auf den zu schützenden Fahrzeuginsassen bzw. den entsprechenden Sitzplatz entfalten.

Bei solchen Anordnungen besteht jedoch das Problem, dass zunächst ein erheblicher Innendruck im Gassack aufgebaut werden muss, bevor dieser die Abdeckung aus ihrer geschlossenen Position in eine geöffnete Position bewegen kann. Dies bedeutet, dass der Gassack bereits mit einem entsprechend großen Innendruck anfänglich aus der Modulaufnahme austritt, was zu einem erhöhten Verletzungsrisiko für einen - außerhalb seiner normalen Sitzposition - über das Airbagmodul gebeugten Fahrzeuginsassen führte, wenn nicht zusätzliche Maßnahmen getroffen würden, um Verletzungen des Fahrzeuginsassen in einem solchen oop-Fall ("out of position-Fall") zu vermeiden. Ferner kann auch die sich in einem Crash-Fall unter dem Druck des sich entfaltenden Gassackes bewegende Abdeckung störend sein.

Andererseits sind Airbagmodule bekannt, die an der dem zu schützenden Fahrzeuginsassen zugewandten Deckfläche über keine Abdeckung verfügen, vergleiche DE 199 34 249 A1. Hierbei besteht jedoch das Problem, dass keine eindeutige, reproduzierbare Entfaltung des Gassackes in einem Crash-Fall gewährleistet ist und die Kombination mit einer Hupenfunktion schwierig ist.

Der Erfindung liegt daher das Problem zugrunde, ein Airbagmodul der eingangs genannten Art weiter zu verbessern, insbesondere hinsichtlich der ersten Phase der Entfaltung des Gassackes beim Aufblasen in einem Crash-Fall.

Dieses Problem wird erfindungsgemäß durch die Schaffung eines Airbagmodules mit den Merkmalen des Patentanspruchs 1 gelöst.

Danach ist vorgesehen, dass sich mindestens eine (einen Bestandteil der Gassackhülle bildende) Lage des im Airbagmodul angeordneten Gassackes vor der dem Sitzplatz zugewandten äußeren Oberfläche der Abdeckung erstreckt und dass die vor der äußeren Oberfläche der Abdeckung liegenden Komponenten des Airbagmodules, soweit sie nicht zwischen der Abdeckung und jener Gassacklage liegen, beim Aufblasen des Gassackes (dauerhaft) mit der Gassackhülle verbunden bleiben.

Bei der erfindungsgemäßen Lösung erstreckt sich also mindestens eine Lage des im Airbagmodul angeordneten Gassackes vor der dem zu schützenden Fahrzeuginsassen zugewandten äußeren Oberfläche der Abdeckung und diese Gassacklage ist von keinen weiteren Komponenten des Airbagmodules überdeckt, die nicht einen Bestandteil des Gassackes bilden. Es ist also keine die besagte Gassacklage überdeckende Airbagkappe vorgesehen, die erst geöffnet werden müsste, bevor sich jene Gassacklage in Richtung auf einen zu schützenden Fahrzeuginsassen bewegen könnte. Über jener Gassacklage sollen vielmehr allenfalls solche Komponenten vorgesehen sein, die einen Bestandteil des Gassackes bilden und die sich beim Aufblasen und Entfalten des Gassackes zusammen mit diesem in Richtung auf den zu schützenden Fahrzeuginsassen bewegen, wie etwa eine auf jener Gassacklage aufgebrachte Designschicht aus Schaumstoff oder weichem Leder.

Zwischen der besagten Gassacklage und der darunter befindlichen äußeren Oberfläche der Abdeckung des Airbagmodules können sich allerdings noch Funktionskomponenten befinden, die beim Aufblasen des Gassackes nicht (vollständig) mit diesem verbunden bleiben, wie etwa Fixiermittel (z.B. ein Klebemittel), über das die Gassacklage leicht lösbar an der Abdeckung fixiert ist.

Die erfindungsgemäße Lösung hat den Vorteil, dass die dem zu schützenden Fahrzeuginsassen zugewandte Gassacklage sich in einem Crash-Fall beim Aufblasen des Gassackes unmittelbar auf den zu schützenden Fahrzeuginsassen zu bewegen kann, ohne dass zuvor eine Airbagkappe geöffnet und ein hierfür erforderlicher entsprechend großer Innendruck des Gassackes aufgebaut werden müsste. Da die Gassacklage sich auf einer äußeren Oberfläche der Abdeckung des Airbagmodules erstreckt, befindet sich diese - vor dem Aufblasen - stets in einer eindeutigen und reproduzierbaren Position innerhalb des Kraftfahrzeugs. Auch erfolgt die Bewegung jener Gassacklage beim Entfalten des Gassackes in einem Crash-Fall stets in eindeutiger und reproduzierbarer Weise in Richtung auf den zu schützenden Fahrzeuginsassen, da die Abdeckung des Airbagmodules als eine Stützfläche wirkt, von der ausgehend sich jene Gassacklage beim Befüllen des Gassackes mit Gas definiert in Richtung auf den zugeordneten Sitzplatz bzw. den dort befindlichen zu schützenden Fahrzeuginsassen bewegen kann.

Ferner wird durch die am Airbagmodul vorgesehne Abdeckung, welche hinter mindestens einer Gassacklage liegt, die Auslösung eines Signalhorns bzw. einer Hupe vereinfacht, sofern es sich bei dem Airbagmodul um ein Fahrer-Airbagmodul handelt. Denn die zum Auslösen des Horns bzw. der Hupe erforderlichen Kräfte können auf jene Abdeckung aufgebracht werden. Der für die Auslösung einer solchen Signaleinrichtung; z. B. in Form einer Hupe, modulseitig anzuordnende elektrische Kontaktbereich, der zum Auslösen der Signaleinrichtung mit einem lenkradseitigen Kontaktbereich in Kontakt bringbar ist, kann einerseits an der Abdeckung des Airbagmodules vorgesehen sein und ist dann bevorzugt als Kontaktfolie ausgebildet oder kann andererseits an einer anderen Komponente des Airbagmodules, wie z. B. der Modulaufnahme angeordnet sein.

Die Abdeckung ist bevorzugt innerhalb des (zu einem Paket zusammengefalteten bzw. zusammengerafften) Gassackes angeordnet.

Gemäß einer Ausführungsform der Erfindung befindet sich vor der äußeren Oberfläche der Abdeckung lediglich mindestens eine Gassacklage, die einen unmittelbaren Bestandteil der Gassackhülle darstellt und dementsprechend an den von der Gassackhülle umschlossenen Innenraum des Gassackes grenzt.

Gemäß einer anderen Ausführungsform der Erfindung ist mit der mindestens einen vor der äußeren Oberfläche der Abdeckung angeordneten Gassacklage mindestens eine weitere Materiallage verbunden, die beim Aufblasen des Gassackes mit der Gassackhülle verbunden bleibt. Es handelt sich also bei der weiteren Materiallage um eine Lage, die (in weiterem Sinne) einen Bestandteil der Hülle des Gassackes bildet, indem sie beim Aufblasen des Gassackes gemeinsam mit der anfänglich vor der Abdeckung liegenden Gassacklage in Richtung auf den zu schützenden Fahrzeuginsassen bzw. den entsprechenden Sitzplatz bewegt wird und dabei kontinuierlich mit jeder Gassacklage verbunden bleibt. Die zusätzliche Materiallage dient zur Modifikation der Oberflächeneigenschaften der Gassackhülle, etwa zu Zwecken einer Verbesserung des Designs, der Haptik oder der Aufpralleigenschaften.

Bei der weiteren Materiallage kann es sich einerseits um eine von der besagten Gassacklage separate Materialschicht handeln, die durch geeignete Verbindungsmittel, wie z. B. ein Klebemittel, mit jener Gassacklage verbunden ist. Die Materiallage kann dann beispielsweise aus einem (weichen) Leder, einem Gewebe, einer Kunststoff- bzw. Metalllage, insbesondere in Form einer tiefgezogenen oder geprägten Folie, oder einer Schaumstoffschicht bestehen.

Nach einer anderen Ausführungsform ist die zusätzliche Materiallage als Materialschicht unmittelbar chemisch oder physikalisch auf die besagte Gassacklage aufgebracht. Bei einer solchen zusätzlichen Materialschicht kann es sich beispielsweise um eine Farbschicht, eine auf die Gassacklage aufgeschäumte Schaumstoffschicht, einen Metall- oder Gummiüberzug, einen Aufdruck oder eine so genannten Slush-Haut handeln.

Die zusätzliche Materiallage bzw. -schicht kann zudem noch weitere Funktionen innerhalb des Kraftfahrzeugs übernehmen, z. B. bei Ausbildung als aufgedruckte Elektrolumineszenz-Folie zur Erzeugung von Lichteffekten, bei Ausbildung als elektronische Kontaktfolie zur Detektion bzw. zur Erzeugung von Signalen oder bei Ausbildung als Schrumpffolie zum Schutz und zur Fixierung von Teilen des Airbagmoduls.

Wichtig ist, dass die weitere Materiallage keine Abdeckung des Airbagmodules bildet, die beim Aufblasen des Gassackes zunächst geöffnet bzw. zerstört werden müsste, um ein Entfalten des Gassackes aus der Modulaufnahme heraus zu ermöglichen. Vielmehr handelt es sich bei der gegebenenfalls vorhandenen, zusätzlichen Materiallage um einen Bestandteil des Gassackes, die dauerhaft mit der Gassackhülle bzw. speziell mit der mindestens einen anfänglich vor der Abdeckung des Airbagmodules angeordneten Gassacklage verbunden ist, z. B. durch Kleben.

Vorteilhaft ist vor der äußeren. Oberfläche der Abdeckung des Airbagmodules genau eine Gassacklage angeordnet, wobei diese teilweise in Falten gelegt sein kann. Es können aber auch mehrere (übereinander liegende) Gassacklagen vor der äußeren Oberfläche der Abdeckung des Airbagmodules vorgesehen sein.

Die mindestens eine Gassacklage kann an der Abdeckung des Airbagmodules lösbar fixiert sein, so dass sie sich beim Aufblasen des Gassackes ohne weiteres hiervon ablösen kann, z. B. unter Verwendung eines geeigneten Klebemittels.

Die Abdeckung, vor der sich mindestens eine Lage des Gassackes erstreckt, ist bevorzugt mit der Modulaufnahme verbunden, in der die zu einem Packet zusammengepackten Bereiche des Gassackes sowie gegebenenfalls weitere Modulkomponenten, wie z. B. ein Gasgenerator, angeordnet sind. Hierzu kann mindestens ein Verbindungsbereich vorgesehen sein, der sich von jener Abdeckung zu einem Boden der Modulaufnahme erstreckt.

Der Verbindungsbereich oder Teile hiervon können an der Abdeckung und/oder an der Modulaufnahme einstückig angeformt sein. Im Übrigen eigenen sich zur Verbindung der Abdeckung mit der Modulaufnahme über einen Verbindungsbereich Befestigungsmittel, wie z. B. Formschlusselemente (Rastelemente bzw. Clips) oder Schrauben.

Die Abdeckung ist bevorzugt so am Airbagmodul anzuordnen, dass sie sich beim Aufblasen des Gassackes nicht vom Airbagmodul löst, also etwa dauerhaft mit der Modulaufnahme verbunden bleibt, ohne sich substantiell in Richtung auf den schützenden Fahrzeuginsassen zu bewegen. Dies bedeutet insbesondere, dass sich die Abdeckung, auch nicht in Teilbereichen, von dem Airbagmodul lösen und in Richtung auf den zu schützenden Fahrzeuginsassen bewegen sollte, wie es etwa bei aufklappbaren Airbagkappen der Fall ist, bei denen eine Seite der Kappe dauerhaft über ein Scharnier mit dem Airbagmodul verbunden ist und sich die übrigen Bereiche der Kappe beim Aufblasen des Airbags (und dem damit verbunden Aufklappen der Kappe) in Richtung auf den Fahrzeuginnenraum bewegen. Demgegenüber soll vorliegend lediglich eine Wölbung der Abdeckung unter der Wirkung des beim Aufblasen des Gassackes entstehenden Druckes möglich sein.

Während mindestens eine Lage des Gassackes vor der äußeren Oberfläche der Abdeckung angeordnet ist, befinden sich die zu einem Gassackpaket zusammengepackten Bereiche des Gassackes bevorzugt hinter der anderen, inneren Oberfläche jener Abdeckung in der Aufnahme des Airbagmodules. Dabei kann die Abdeckung das Modulinnere zusammen mit der Modulaufnahme (allseitig) umschließen.

Die zu einem Gassackpaket zusammengepackten Bereiche des Gassackes sind bevorzugt derart seitlich neben dem Gasgenerator angeordnet, dass der Gasgenerator und das Gassackpaket entlang der Fläche, entlang der sich die Deckfläche bzw. Abdeckung des Airbagmodules erstreckt, nebeneinander liegen. Hierbei kann insbesondere vorgesehen sein, dass das Gassackpaket den Gasgenerator ringförmig umgibt.

Dabei weisen die Abströmöffnungen des Gasgenerators bzw. der nach dem Aktivieren des Gasgenerators hieraus austretende Gasstrom bevorzugt zumindest teilweise auf die zu einem Packet zusammengepackten Bereiche des Gassackes. Mit anderen Worten ausgedrückt strömen die aus den Abströmöffnungen des Gasgenerators austretenden Gase in Richtungen entlang der Deckfläche des Airbagmodules, also im Wesentlichen parallel hierzu.

Dabei kann weiter vorgesehen sein, dass der Verbindungsbereich, über den die Abdeckung des Airbagmodules mit dessen Aufnahme verbunden ist, den Gasgenerator umgibt, wohingegen die zu einem Gassackpaket zusammengepackten Bereiche des Gassackes außerhalb des vom Verbindungsbereich umschlossenen Raumes vorgesehen sind. In diesem Fall sind in dem Verbindungsbereich Durchgangsöffnungen vorgesehen, durch die hindurch aus dem Gasgenerator austretendes Gas in den Gassack einströmen kann. Die Durchgangsöffnungen können entlang des Verlaufes des Verbindungsbereiches um den Gasgenerator herum eine gleichmäßige Verteilung und/oder Größe aufweisen. Zur Steuerung der Entfaltung des Gassackes ist es aber auch möglich, diese mit unterschiedlichen Abständen anzuordnen bzw. mit unterschiedlichen Abmaßen zu versehen.

Alternativ kann vorgesehen sein, dass die Abdeckung des Airbagmodules mit dessen Aufnahme über eine Mehrzahl separater, räumlich voneinander beabstandeter Verbindungsabschnitte verbunden ist, so dass aus dem Gasgenerator austretendes Gas durch den zwischen jeweils zwei Verbindungsabschnitten gebildeten Freiraum hindurch in den Gassack einströmen kann, um diesen aufzublasen.

Gemäß einer vorteilhaften Weiterbildung der Erfindung erstreckt sich mindestens eine Seitenwand des Airbagmodules im Wesentlichen quer zu der von der Abdeckung des Airbagmodules zumindest teilweise überdeckten Deckfläche, wobei diese Seitenwand öffenbar ist, so dass sich der Gassack durch die beim Öffnen der Seitenwand freigegebene Öffnung hindurch entfalten kann, und zwar bevorzugt entlang der Deckfläche des Airbagmodules, d.h. im Wesentlichen parallel zu dieser. Hierzu ist die besagte Seitenwand vorteilhaft schwenkbar, z. B. über ein Scharnier, am Airbagmodul bzw. genauer an der Modulaufnahme angelenkt. Alternativ kann die Seitenwand beim Aufblasen des Gassackes zerstörbar, z. B. aufreißbar, ausgebildet sein.

Bei einem derartigen Airbagmodul tritt der Gassack beim Aufblasen und Entfalten zunächst entlang einer Richtung aus dem Airbagmodul aus, die sich im Wesentlichen parallel zur Deckfläche des Airbagmodules erstreckt. Es erfolgt also keine unmittelbare Entfaltung in Richtung auf den zu schützenden Fahrzeuginsassen, auf den ja die Deckfläche des Airbagmodules weist, sondern eine seitliche Entfaltung, die mit einer geringeren Verletzungsgefahr für den zu schützenden Fahrzeuginsassen verbunden ist. Erst danach beginnt die vor der Abdeckung des Airbagmodules angeordnete Gassacklage sich von jener Abdeckung abzuheben und sich - mit vergleichsweise geringer Geschwindigkeit - in Richtung auf den zu schützenden Fahrzeuginsassen zu bewegen. Hierdurch wird das Verletzungsrisiko eines außerhalb seiner Normalposition besonders nahe bei dem Airbagmodul befindlichen Fahrzeuginsassen während des Aufblasens und Entfaltens des Gassackes minimiert.

Um die Entfaltung des Gassackes zunächst in seitlicher Richtung, also im Wesentlichen entlang der Deckfläche des Airbagmodules zu befördern, weisen die Austrittsöffnungen des Gasgenerators bevorzugt in Richtung auf die Seitenwände des Airbagmodules.

Weitere Einzelheiten und Vorteile der Erfindung werden bei der nachfolgenden Beschreibung von Ausführungsbeispielen anhand der Figuren deutlich werden.

Es zeigen:

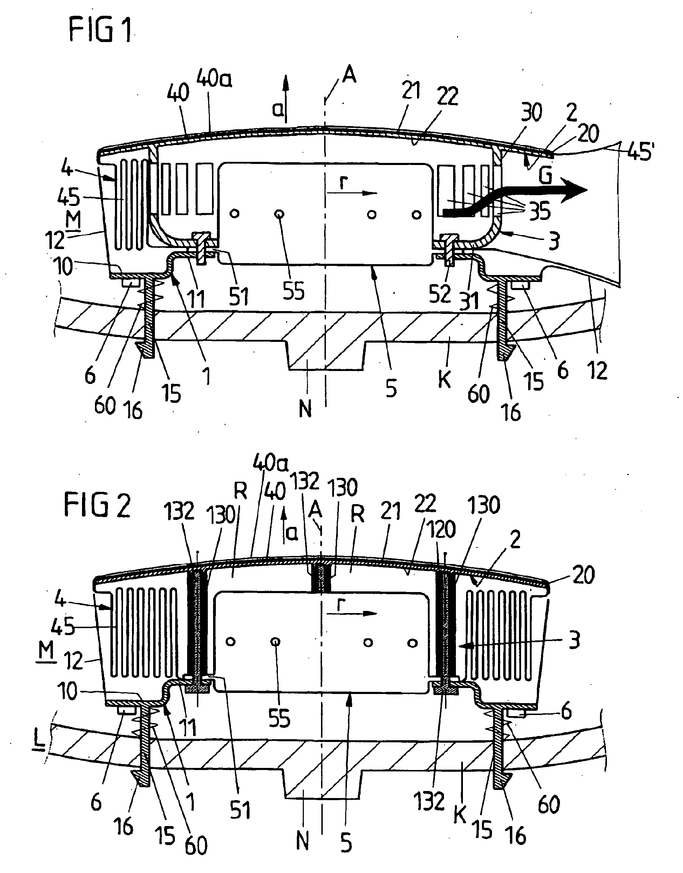

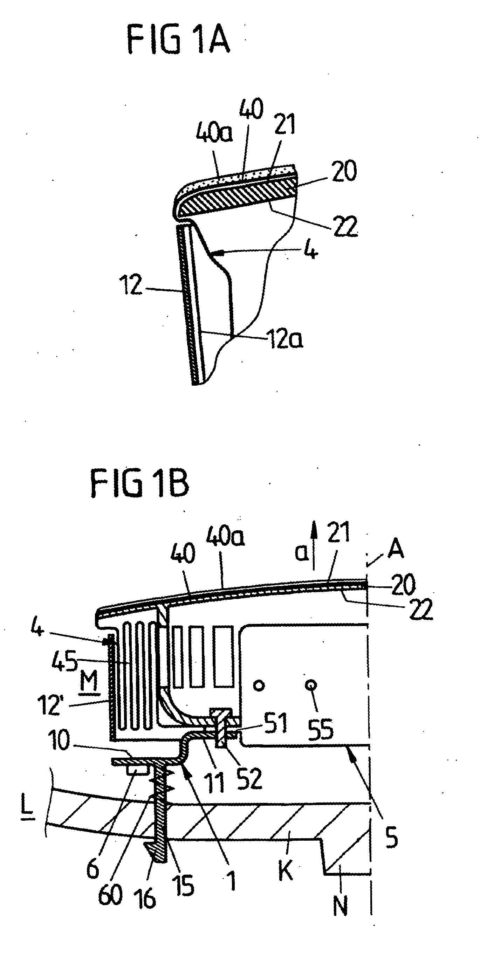

- Fig. 1: ein erstes Ausführungsbeispiel eines an einem Lenkrad angeordneten Airbagmodules für ein Kraftfahrzeug im Querschnitt;
- Fig. 1a: ein Detail der Darstellung aus Figur 1;
- Fig. 1 b: einen Ausschnitt aus Figur 1 mit einer Variante hinsichtlich der Ausbildung einer Seitenwand des Airbagmodules;
- Fig. 2: eine erste Abwandlung des Ausführungsbeispieles aus Figur 1;
- Fig. 3: eine zweite Abwandlung des Ausführungsbeispieles aus Figur 1.

Figur 1 zeigt ein Airbagmodul M für ein Kraftfahrzeug, das in der Umgebung einer Lenkradnabe N am Lenkradkörper K eines Lenkrades L angeordnet ist. Das (bevorzugt aus Kunststoff bestehende) Airbagmodul M umfasst eine Modulaufnahme 1, an bzw. in der ein zum Schutz eines Fahrzeuginsassen aufblasbarer Gassack 4 sowie ein Gasgenerator 5 zum Aufblasen des Gassackes 4 in einem Crash-Fall angeordnet sind.

Bei der Figur 1 handelt es sich um eine so genannte geteilte Darstellung des Airbagmodules M, wobei die linke Hälfte der Figur 1 (links der zentralen Achse A) das Airbagmodul M im Ruhezustand zeigt und die rechte Hälfte der Figur 1 (rechts der zentralen Achse A) das Airbagmodul M beim Aufblasen des Gassackes 4 mittels des Gasgenerators 5 zeigt.

Die (im Beispiel aus Kunststoff bestehende) Modulaufnahme 1 wird vorliegend gebildet durch einen Modulboden 10 und eine ringförmig umlaufende, von dem Modulboden 10 abstehende Seitenwand 12, welche den Gassack 4 sowie den Gasgenerator 5 ringförmig umgibt.

Von dem Modulboden 10 stehen einerseits in Richtung auf den Lenkradkörper K Befestigungshaken 15 ab, die an ihren freien Enden jeweils einen Befestigungskopf 16 aufweisen und die in bekannter Weise zur Befestigung des Airbagmodules M an dem Lenkradkörper K mittels einer Rastverbindung dienen. Hierzu ist der Lenkradkörper K in der Umgebung der Lenkradnabe N mit Rastöffnungen versehen, die von den Befestigungshaken 15 durchgriffen werden. Weiterhin bildet die Modulaufnahme 1 am Modulboden 10 einen den vorliegend als Topfgasgenerator ausgebildeten Gasgenerator 5 ringförmig umlaufenden Befestigungsflansch 11 der an einem zugeordneten generatorseitigen Befestigungsflansch (Generatorflansch 51) anliegt, so dass der Gasgenerator 5 mit seinem Generatorflansch 51 durch geeignete Befestigungsmittel 52, z. B. in Form von Schrauben, an der Modulaufnahme 1, genauer an deren Befestigungsflansch 11, festlegbar ist.

Auf der dem Modulinneren abgewandten und somit dem Lenkradkörper K zugewandten Seite des Modulbodens 10 der Modulaufnahme 1 sind elektrische Kontaktelemente 6 vorgesehen, die zur Auslösung einer elektrischen Funktionskomponente des Kraftfahrzeugs, z. B. eines Signalhorns (Hupe), mit entsprechenden, lenkradseitigen Gegenkontakten in elektrischen Kontakt bringbar sind, wenn auf das Airbagmodul M eine Kraft in Richtung auf den Lenkradkörper K ausgeübt wird. Hierzu stützt sich das Airbagmodul M über an den Befestigungshaken 15 vorgesehene Federelemente 60 in Form von Schraubenfedern (ausgebildet als Druckfedern) elastisch am Lenkradkörper K ab. Diese Federelemente 60 halten das Airbagmodul M im normalen Betriebszustand in einem solchen Abstand von dem Lenkradkörper K, dass die modulseitigen Kontaktelemente 6 nicht mit dem zugeordneten lenkradseitigen Gegenkontakten in Kontakt stehen. Bei Ausübung einer Kraft auf das Airbagmodul M in Richtung auf den Lenkradkörper K, insbesondere indem ein Nutzer des Lenkrades (Fahrer eines Kraftfahrzeugs) mit seiner Handfläche auf eine Abdeckung 2 des Airbagmodules M drückt, werden die Federelemente 60 komprimiert, so dass die modulseitigen Kontaktelemente 6 mit den lenkradseitigen Gegenkontakten in elektrischen Kontakt treten können.

Die von dem Modulboden 10 abstehende, den im Modulinneren angeordneten Gassack 4 sowie den Gasgenerator 5 ringförmig umgebende Seitenwand 12 der Modulaufnahme 1. besteht aus einem solchen Material bzw. ist derart dünnwandig ausgebildet, dass die Seitenwand 12 unter der Wirkung des sich beim Aufblasen in einem Crash-Fall entfaltenden Gassackes 4 zerstörbar bzw. öffenbar ist, so dass der Gassack 4 beim Aufblasen durch die den Gassack 4 ringförmig umgebende Seitenwand 12 des Airbagmoduls hindurch seitlich austreten kann.

Der Gassack 4 ist hierzu derart im Modulinneren angeordnet, dass zu einem Gassackpaket 45 zusammengefaltete Bereiche des Gassackes seitlich neben dem Gasgenerator 5 liegen. D. h., die zu einem Gassackpaket 45 zusammengefalteten Bereiche des Gassackes 4 liegen weder zwischen dem Gasgenerator 5 und dem Lenkradkörper K noch zwischen dem Gasgenerator 5 und der Modulabdeckung 2, sondern vielmehr neben dem Gasgenerator 5 zwischen dem Modulboden 10 und der Modulabdeckung 2.

Die am Gasgenerator 5 vorgesehenen Austrittsöffnungen 55, durch die hindurch beim Auslösen des Gasgenerators in einem Crash-Fall erzeugtes Gas zum Aufblasen des Gassackes 4 aus dem Gasgenerator 5 austreten kann, sind seitwärts in Richtung auf das neben dem Gasgenerator 5 liegende Gassackpaket 45 gerichtet. D. h., der durch jene Austrittsöffnungen 55 aus dem Gasgenerator 5 austretende Gasstrom G ist im Wesentlichen entlang dem Modulboden 10 bzw. der Modulabdeckung 2 gerichtet; er verläuft also im Wesentlichen parallel sowohl zum Modulboden 10 als auch zur Modulabdeckung 2 und dabei zwischen dem Modulboden 10 sowie der Modulabdeckung 2.

Die (im Beispiel aus Kunststoff bestehende und eine obere Deckfläche der Modulaufnahme 1 verschließende) Modulabdeckung 2 ist vorliegend über einen Verbindungsbereich 3, der sich von der Modulabdeckung 2 in Richtung auf den Modulboden 10 erstreckt, mit der Modulaufnahme 1 verbunden, und zwar dadurch, dass ein abgewinkelter Endabschnitt 31 des Verbindungsbereiches 3 sich im Wesentlichen parallel zu den Befestigungsflanschen 11, 51 der Modulaufnahme 1 und des Gasgenerators 5 erstreckt und über die dort vorgesehenen Befestigungsmittel 52, z. B. in Form von Schrauben, gemeinsam mit dem Gasgenerator 5 an dem Modulboden 10 festgelegt ist.

Der Verbindungsbereich 3 umgibt den Gasgenerator 5 mit einer ringförmig umlaufenden, von der Modulabdeckung 2 abstehenden und einstückig an dieser angeformten Ringwand 30 ringartig und liegt dabei zwischen dem Gasgenerator 5 und den zu einem Gassackpaket 45 gefalteten Gassackbereichen, welche also in radialer Richtung r (senkrecht zur zentralen Modulachse A) jenseits des Verbindungsbereiches 3 liegen. Mit anderen Worten ausgedrückt erstreckt sich der Verbindungsbereich 3 zwischen dem Gasgenerator 5 und den zu einem Gassackpaket 45 zusammengefalteten Gassackbereichen. Damit die in radialer Richtung aus den Austrittsöffnungen 55 des Gasgenerators 5 austretenden Gase G zum Aufblasen des Gassackes 4 in diesen eintreten können, sind in dem Verbindungsbereich 3 Durchtrittsöffnungen 35 ausgebildet, die einen Gasstrom G vom Gasgenerator 5 zu den zu einem Gassackpaket 45 zusammengefalteten Gassackbereichen ermöglichen.

Eine wichtige Besonderheit des in Figur 1 dargestellten Airbagmodules M liegt darin, dass die Modulabdeckung 2 durch eine über den Verbindungsbereich 3 fest mit der Modulaufnahme 1 verbundene Abdeckkappe 20 gebildet wird, die aus einem hinreichend festen Material (Kunststoff) besteht und keine Schwächungsbereiche in Form von Aufreißlinien oder dergleichen aufweiset, so dass die Modulabdeckung 2 beim Aufblasen und Entfalten des Gassackes 4 (mittels des aus dem Gasgenerator austretenden Gasstromes G) nicht geöffnet wird, also keine Öffnung in der oberen Deckfläche des Airbagmodules M freigibt. Der Gassack 4 entfaltet sich daher zunächst nur in seitlicher bzw. radialer Richtung r, also entlang des Modulbodens 10 und der Modulabdeckung 2, durch die beim Entfalten des Gassackes 4 aufreißende Seitenwand 12 der Modulaufnahme 1 hindurch nach außen, wie auf der rechten Seite der Figur 1 erkennbar. Dort sind die vormals zu einem Gassackpaket zusammengefalteten Gassackbereiche 45' in einem Zustand dargestellt, in dem sie unter Zerstörung der Seitenwand 12 der Modulaufnahme 1 seitlich nach außen aus dem Modulinneren austreten.

Bevorzugt ist die Seitenwand 12 hierzu derart ausgebildet, dass sie bei Entfaltung des Gassackes 4 in einzelne Segmente aufgetrennt wird. Das Auftrennen erfolgt vorteilhaft entlang an der Seitenwand 12 ausgebildeter Reißlinien 12a, z. B. in Form von Perforationen oder sonstiger Materialschwächungen, vergleiche Figur 1 a. Alternativ hierzu kann die Seitenwand 12 von Anfang an in eine Mehrzahl einzelner Segmente unterteilt sein, die den Gassack 4 und den Gasgenerator 5 z.B. in Form einzelner Finger ringartig umgeben. Die rechte Seite der Figur 1 zeigt ein beim Entfalten des Gassackes 4 entlang von Aufreißlinien von den übrigen Bereichen der Seitenwand abgetrenntes Segment der Seitenwand 12, welches unter der Kraftwirkung des sich entfaltenden Gassackes 4 um einen Scharnierbereich (über den die Seitenwand 12 scharnierartig am Modulboden 10 angelenkt ist) umgeklappt wurde.

Die dauerhaft fest mit der Modulaufnahme 1 verbundene, beim Aufblasen und Entfalten des Gassackes 4 sich nicht öffnende Modulabdeckung 2 weist eine dem Modulinneren, und damit den zu einem Gassackpaket 45 zusammengefalteten Gassackbereichen sowie dem Gasgenerator 5 zugewandte innere Oberfläche 22 sowie eine dem das Airbagmodul M umgebenden Außenraum zugewandte äußere Oberfläche 21 auf.

In dem in ein Kraftfahrzeug eingebauten Zustand des Lenkrades L weist die äußere Oberfläche 21 des Airbagmodules M in Richtung auf den Sitzplatz, eines Fahrzeugführers bzw. Fahrers; sie ist also dem Fahrer des Kraftfahrzeugs zugewandt, wenn sich dieser bestimmungsgemäß auf seinem Sitzplatz hinter dem in das Kraftfahrzeug eingebauten Lenkrad L befindet.

Vor der äußeren Oberfläche 21 der Modulabdeckung 2 erstreckt sich eine Lage 40 des Gassackes 4, die zwischen der Seitenwand 12 und der Abdeckung 2 des Airbagmodules M hindurch aus dem Modulinneren vor die äußere Oberfläche 21 der Modulabdeckung 2 geführt ist. Diese Gassacklage 40 ist also im eingebauten Zustand der Lenkradbaugruppe L, M dem Sitzplatz des zu schützenden Fahrzeuginsassen (Fahrer) zugewandt. Anhand der Detaildarstellung in Figur 1a ist dabei erkennbar, wie der Gassack 4 durch einen Ringspalt zwischen der Seitenwand 12 und der Modulabdeckung 2 aus dem Modulinneren vor die äußere Oberfläche 21 der Modulabdeckung 2 geführt ist.

Die vor der äußeren Oberfläche 21 der Modulabdeckung 2 liegende Gassacklage 40 ist lösbar an der Modulabdeckung 2 fixiert, z. B. durch ein Klebemittel, welches zwischen der Gassacklage 40 und der äußeren Oberfläche 21 der Modulabdeckung 2 aufgetragen ist, so dass sich die Gassacklage 4 von der Modulabdeckung 2 bzw. genauer deren äußerer Oberfläche 21 lösen kann, wenn beim Aufblasen und Entfalten des Gassackes entsprechend große (Zug-)Kräfte wirken, die die Tendenz haben, die Gassacklage 40 von der Modulabdeckung 2 abzuheben.

Die Gassacklage 40 bewegt sich dann in axialer Richtung a (entlang der zentralen Modulachse A und im Wesentlichen senkrecht zur äußeren Oberfläche 21 der Modulabdeckung 2) in Richtung auf den zu schützenden Fahrzeuginsassen (Fahrer). Hierbei ist jedoch zu beachten, dass zwischen jener Gassacklage 40 und dem Modulinneren, also insbesondere dem Gasgenerator 5, dauerhaft die Modulabdeckung 2 liegt, so dass jene Gassacklage 40 nicht unmittelbar durch die aus dem Gasgenerator 5 austretenden Gase angeströmt wird. Jener Gasstrom G tritt vielmehr, wie weiter oben bereits beschrieben, in seitlicher bzw. radialer Richtung r aus dem Gasgenerator 5 aus und bewirkt in erster Linie ein seitliches. Entfalten des Gassackes 4 durch die Seitenwand 12 des Airbagmodules M hindurch. Der Gassack 4 entfaltet sich also beim Aufblasen nicht sofort In Richtung auf den zu schützenden Fahrzeuginsassen, sondern zunächst in radialer Richtung r seitlich vor dem zu schützenden Fahrzeuginsassen (Fahrer).

Als Folge der Expansion des Gassackes 4 beim Aufblasen wirken aber, wie bereits angegeben, an der Gassackhülle zunehmend Kräfte, die die Tendenz haben, die vor der äußeren Oberfläche 21 der Gassackabdeckung 2 liegende Gassacklage 40 von der Gassackabdeckung 2 bzw. genauer deren äußerer Oberfläche 21 abzuheben. Jene Gassacklage 40 bewegt sich dann mit entsprechend reduzierter Geschwindigkeit in axialer Richtung a senkrecht zur Modulabdeckung 2 bzw. deren äußerer Oberfläche 21 in Richtung auf den zu schützenden Fahrzeuginsassen. Hierdurch wird das Verletzungsrisiko des Fahrzeuginsassen durch ein Zusammentreffen mit dem sich entfaltenden Gassack 4 insbesondere in solchen Fällen reduziert, in denen sich der Fahrzeuginsasse im Zeitpunkt des Aufblasens und Entfaltens des Gassackes 4 außerhalb seiner normalen Sitzposition außergewöhnlich dicht bei dem Airbagmodul M befindet, z. B. weil sich der Fahrzeuginsasse (Fahrer) über das Lenkrad L gebeugt hat.

Aus Designgründen, zur Verbesserung der Haptik, oder auch um die Gassacklage 40 hinsichtlich ihrer Eigenschaften beim Zusammentreffen mit einem zuschützenden Fahrzeuginsassen zu optimieren, kann an der Gassacklage 40 eine zusätzliche Materialschicht 40a aufgebracht sein, und zwar bevorzugt auf der der Abdeckung 2 abgewandten und dem zu schützenden Fahrzeuginsassen zugewandten Seite der Gassacklage 40. Die zusätzliche Materialschicht 40a als auf die Gassacklage 40 aufgebrachte Schicht ist insbesondere anhand der Detaildarstellung in Figur 1a deutlich erkennbar. Diese Detaildarstellung gilt hinsichtlich der Anordnung der weiteren Materialschicht 40a auf der Gassacklage 40 auch für die nachfolgenden, anhand der Figuren 1b, 2 und 3 zu beschreibenden Ausführungsbeispiele.

Bei dieser zusätzlichen Materialschicht 40a handelt es sich nicht um eine Abdeckung der Gassacklage 40, die beim Entfalten des Gassackes geöffnet werden müsste, um eine Bewegung der Gassacklage 40 in Richtung auf den zu schützenden Fahrzeuginsassen zu ermöglichen. Vielmehr ist diese Materialschicht 40a dauerhaft mit der Gassacklage 40 verbunden; sie bleibt also auch beim Aufblasen und Entfalten des Gassackes 4 sowie beim Zusammentreffen der Gassacklage 40 mit einem zu schützenden Fahrzeuginsassen an jener Gassacklage 40.

Als Material für eine, z. B. durch Kleben oder Schweißen, an der Gassacklage 40 anzuordnende Materialschicht 40a eignen beispielsweise (weiches) Leder, ein Gewebe, eine Kunststoff- bzw. Metallschicht, z. B. in Form einer tiefgezogenen oder geprägten Folie, oder eine Schaumstoffschicht.

Weiterhin kann eine entsprechende Materialschicht 40a auch unmittelbar chemisch oder physikalisch auf die Gassacklage 40 aufgebracht werden, z. B. als Farbschicht, als aufgeschäumter Kunststoff, als so genannte Slush-Haut, als Metall- oder Gummiüberzug, als Aufdruck oder dergleichen.

Darüber hinaus kann die zusätzliche Materialschicht 40a noch weitere Aufgaben übernehmen, z. B. bei Ausbildung als Elektrolumineszenz-Folie zur Erzeugung von Lichteffekten, bei Ausbildung als Schrumpffolie zum Schutz und zur Fixierung der Gassacklage 40 sowie bei Ausbildung als Sensor- bzw. Kontaktfolie zur Auslösung eines Signalhorns oder dergleichen.

Figur 1b zeigt eine Variante des Ausführungsbeispieles aus Figur 1 hinsichtlich der Ausbildung der Seitenwand der Modulaufnahme 1. Bei der Seitenwand 12' handelt es sich im Fall der in Figur 1b gezeigten Variante um ein vom Modulboden 10 der Modulaufnahme 1 separates, den Gassack 4 und Gasgenerator 5 ringartig umgebendes Bauteil, welches in geeigneter Weise am Airbagmodul, insbesondere an der Modulaufnahme 1 (bzw. am Modulboden 10), festgelegt ist. Die (aus einem festen oder flexiblen Material bestehende) Seitenwand 12' ist so auszubilden, dass sie beim Entfalten des Gassackes 4 nach Aktivierung des Gasgenerators 5 eine Öffnung für den sich entfaltenden Gassack freigibt, z. B. durch Aufreißen oder Umklappen der Seitenwand 12'.

Figur 2 zeigt eine Abwandlung des Ausführungsbeispieles aus Figur 1, und zwar in einer Darstellung, in der das Airbagmodul M durchgängig in dem Betriebszustand vor dem Aufblasen des Gassackes 4 gezeigt ist.

Das in Figur 2 gezeigte Ausführungsbeispiel unterscheidet sich von der in Figur 1 gezeigten Anordnung in der Ausgestaltung des Verbindungsbereiches 3, über den die Modulabdeckung 2 mit der Modulaufnahme 1 verbunden ist. Gemäß der vorstehend beschriebenen, in Figur 1 gezeigten Anordnung ist hierzu ein einstückig an der Modulabdeckung 2 angeformter, von dieser in Richtung auf den Boden 10 der Modulaufnahme 1 abstehender und den Gasgenerator 5 ringförmig umschließender Verbindungsbereich 3 vorgesehen, der über Befestigungsmittel 52 in Form von Schrauben an der Modulaufnahme 1 festgelegt ist.

Demgegenüber wird bei der in Figur 2 gezeigten Anordnung der Verbindungsbereich 3 durch eine Mehrzahl von der Modulabdeckung 2 abstehender, räumlich voneinander beabstandeter Verbindungsabschnitte gebildet, die in ihrer Gesamtheit den Gasgenerator 5 ringförmig umgeben. Die Verbindungsabschnitte bestehen jeweils aus einer Verbindungshülse in Form einer Distanzbuchse 130, die sich von der Modulabdeckung 2 bis zu dem Modulboden 10 bzw. dem Befestigungsflansch 51 des Gasgenerators 5 erstreckt und an die sich zur Modulabdeckung 2 hin (im Bereich der Mündung einer jeweiligen Distanzbuchse 130) jeweils ein einstückig an der Modulabdeckung 2 angeformter Gewindeabschnitt 120 (mit Innengewinde) anschließt, in den jeweils eine Befestigungsschraube 132 einschraubbar ist.

Jede der Distanzbuchsen 130 wird von jeweils einer der Befestigungsschrauben 132 durchgriffen, die in den der jeweiligen Distanzbuchse zugeordneten Gewindeabschnitt 120 der Modulabdeckung eingeschraubt ist und die jeweils zur Festlegung sowohl der Modulabdeckung 2 als auch des Gasgenerators 5 an der Modulaufnahme 1 dient. Hierzu durchgreift die jeweilige Befestigungsschraube 132 jeweils ein Durchgangsloch im Befestigungsflansch 11 der Modulaufnahme 1 sowie im Generatorflansch 51 des Gasgenerators 5.

Dadurch, dass die einzelnen Verbindungsabschnitte in Form von Distanzbuchsen 130, welche sich jeweils von der Modulabdeckung 2 bis zum Boden 10 der Modulaufnahme 1 erstrecken und dort jeweils am Generatorflansch 51 anliegen, räumlich voneinander beabstandet sind, kann das nach dem Auslösen des Gasgenerators 5 aus diesem bzw. aus dessen Austrittsöffnungen 5 austretende Gas durch die zwischen den einzelnen Verbindungsabschnitten 130 liegenden Zwischenräume R hindurch in den aufzublasenden Gassack bzw. genauer in die zu einem Gassackpaket 45 zusammengefalteten Bereich des Gassackes 4 einströmen.

Im Übrigen stimmt das in Figur 2 gezeigte Ausführungsbeispiel mit der Anordnung aus Figur 1 überein.

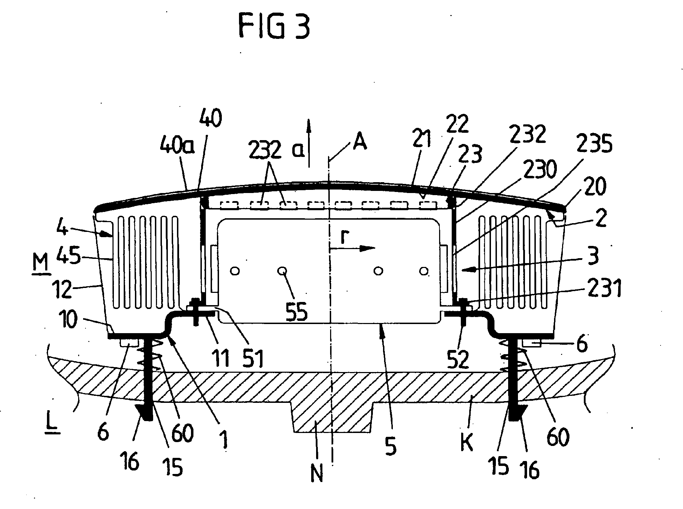

Figur 3 zeigt eine weitere Abwandlung der Anordnung aus Figur 1 hinsichtlich der Ausbildung des Verbindungsbereiches 3, über den die Modulabdeckung 2 mit .der Modulaufnahme 1 genauer dem Modulboden 10 verbunden ist. Hierzu ist gemäß Figur 3 ein den Gasgenerator 5 ringförmig umschließender Verbindungsring 230 vorgesehen, der als separates Teil einerseits an der Modulabdeckung 2 und andererseits an der Modulaufnahme 1 im Bereich des Modulbodens 10 festgelegt ist und sich von der Modulabdeckung 2 zum Modulboden 10, genauer bis zum Generatorfiansch 51, erstreckt.

Der Verbindungsring 230 ist an der Modulabdeckung 2 durch eine Rastverbindung 23, 232 festgelegt, indem modulabdeckungsseitige Rasthaken 23 in verbindungsringseitige Rastöffnungen 232 eingreifen. Die Festlegung des Verbindungsringes 230 an der Modulaufnahme 1 erfolgt durch Befestigungsmittel 52 in Form von Schrauben, welche, wie bereits anhand Figur 1 beschrieben, gleichzeitig auch zur Festlegung des Gasgenerators 5 an der Modulaufnahme 1 dienen. Hierzu durchgreifen die Befestigungsschrauben 52 miteinander fluchtende Befestigungsöffnungen in einem abgewinkelten Flanschabschnitt 231 des Verbindungsringes 230, im Generatorflansch 51 sowie im Befestigungsflansch 11 der Modulaufnahme 1.

Der den Verbindungsbereich 3 bildende Befestigungsring 230 weist - wie auch der Verbindungsbereich aus Figur 1 - eine Mehrzahl Durchtrittsöffnungen 235 auf, durch die hindurch aus den Austrittsöffnungen 55 des Gasgenerators 5 austretendes Gas in die zu einem Gassackpaket 45 zusammengefalteten Gassackbereiche strömen kann.

## Patentansprüche

1. Airbagmodul (M) für ein Kraftfahrzeug, mit
- einem mittels eines Gasgenerators (5) zum Schutz eines auf einem Sitzplatz eines Kraftfahrzeugs befindlichen Fahrzeuginsassen aufblasbaren Gassack (4), der eine einen Innenraum des Gassackes umschließende Gassackhülle aufweist,
- einer Modulaufnahme (1), an der der Gassack (4) als Gassackpaket (45) untergebracht ist,
- einer Deckfläche des Airbagmodules (M), welche bei bestimmungsgemäßem Einbau des Airbagmodules in ein Kraftfahrzeug so im Kraftfahrzeug angeordnet ist, dass die Deckfläche dem zugeordneten Sitzplatz zugewandt ist, und
- einer sich entlang der Deckfläche erstreckenden Abdeckung (2) des Airbagmodules,
**dadurch gekennzeichnet,**
**dass** sich mindestens eine einen Bestandteil der Gassackhülle bildende Lage (40) des Gassackes (4) vor der dem Sitzplatz zugewandten äußeren Oberfläche (21) der Abdeckung (2) erstreckt und dass vor der äußeren Oberfläche (21) der Abdeckung (2) angeordnete Komponenten (40, 40a) des Airbagmodules, soweit sie nicht zwischen der äußeren Oberfläche (21) der Abdeckung (2) und der mindestens einen Gassacklage (40) liegen, beim Aufblasen des Gassackes (4) mit der Gassackhülle verbunden bleiben.

2. Alrbagmodul nach Anspruch 1, **dadurch gekennzeichnet, dass** der Gassack (4) dazu eingerichtet und vorgesehen ist, sich beim Aufblasen in Richtung auf einen zu schützenden Fahrzeuginsassen zu bewegen, der bestimmungsgemäß auf dem zugeordneten Sitzplatz sitzt.

3. Airbagmodul nach Anspruch 2, **dadurch gekennzeichnet, dass** sämtliche Fahrzeugkomponenten (40, 40a), die vor der äußeren Oberfläche (21) der Abdeckung (2) liegen und die bewegt werden müssen, damit der Gassack (4) in Richtung auf den zu schützenden Fahrzeuginsassen aufgeblasen werden kann, beim Aufblasen des Gassackes (4) mit dessen Gassackhülle verbunden bleiben.

4. Airbagmodul nach einem der Ansprüche 1 bis 3, **dadurch gekennzeichnet, dass** vor der äußeren Oberfläche (21) der Abdeckung (2) als Komponente des Airbagmodules lediglich die mindestens eine Gassacklage (40) angeordnet ist, die einen Bestandteil der Gassackhülle bildet und dadurch dauerhaft mit der Gassackhülle verbunden ist.

5. Airbagmodul nach Ansprüche 1 bis 3, **dadurch gekennzeichnet, dass** vor der äußeren Oberfläche (21) der Abdeckung (2) zusätzlich zu der mindestens einen Gassacklage (40) mindestens eine weitere, aus einem flexiblen Material bestehende Materiallage (40a) angeordnet ist, die mit der Gassackhülle verbunden ist und beim Aufblasen des Gassackes (4) mit der Gassackhülle verbunden bleibt.

6. Airbagmodul nach Anspruch 5, **dadurch gekennzeichnet, dass** die weitere Materiallage (40a) mit der mindestens einen Gassacklage (40) verbunden ist und beim Aufblasen des Gassackes (4) dauerhaft flächig an dieser anliegt.

7. Airbagmodul nach Anspruch 5 oder 6, **dadurch gekennzeichnet, dass** die weitere Materiallage (40a) derart mit der mindestens einen Gassacklage (40) verbunden ist, dass die weitere Materiallage (40a) sich beim Aufblasen des Gassackes (4) gemeinsam mit der mindestens einen Gassacklage (40) bewegt.

8. Airbagmodul nach einem der Ansprüche 5 bis 7, **dadurch gekennzeichnet, dass** die weitere Materiallage (40a) vor der der Abdeckung (2) abgewandten Oberfläche der mindestens einen Gassacklage 40) angeordnet ist.

9. Airbagmodul nach einem der Ansprüche 5 bis 8, **dadurch gekennzeichnet, dass** die weitere Materiallage (40a) als eine von der Gassacklage (40) separate Materialschicht ausgebildet ist, die mit der Gassacklage (40) verbunden ist.

10. Airbagmodul nach Anspruch 9, **dadurch gekennzeichnet, dass** die weitere Materiallage (40a) durch ein Klebemittel mit der Gassacklage (40) verbunden ist.

11. Airbagmodul nach einem der Ansprüche 5 bis 10, **dadurch gekennzeichnet, dass** die weitere Materiallage (40a) aus Leder, Gewebe, Kunststoff, Schaumstoff oder Metall besteht.

12. Airbagmodul nach einem der Ansprüche 5 bis 8, **dadurch gekennzeichnet, dass** die weitere Materiallage (40a) als Materialschicht chemisch oder physikalisch auf die Gassacklage (40) aufgebracht ist.

13. Airbagmodul nach Anspruch 12, **dadurch gekennzeichnet, dass** die weitere Materiallage (40a) als Farbschicht, als Schaumstoffschicht, als Metall- oder Gummiüberzug oder als Aufdruck ausgebildet ist.

14. Airbagmodul nach einem der vorhergehenden Ansprüche, **dadurch gekennzeichnet, dass** sich vor der äußeren Oberfläche (21) der Abdeckung (2) genau eine Gassacklage (40) erstreckt.

15. Airbagmodul nach einem der vorhergehenden Ansprüche, **dadurch gekennzeichnet, dass** die mindestens eine Gassacklage (40) auf der äußeren Oberfläche (21) der Abdeckung (2) anliegt.

16. Airbagmodul nach einem der vorhergehenden Ansprüche, **dadurch gekennzeichnet, dass** die mindestens eine Gassacklage (40) an der Abdeckung (2) lösbar fixiert ist.

17. Airbagmodul nach Anspruch 16, **dadurch gekennzeichnet, dass** zur lösbaren Fixierung der mindestens einen Gassacklage (40) an der Abdeckung (2) ein Klebemittel dient.

18. Airbagmodul nach einem der vorhergehenden Ansprüche, **dadurch gekennzeichnet, dass** vor der der Abdeckung (2) abgewandten Oberfläche der Gassacklage (40), die sich entlang der Abdeckung (2) erstreckt, keine Komponenten des Airbagmodules liegen, die beim Aufblasen des Gassackes (4) geöffnet werden müssten, um eine Bewegung der mindestens einen Gassacklage (40) in Richtung auf den Sitzplatz zu ermöglichen.

19. Airbagmodul nach einem der vorhergehenden Ansprüche, **dadurch gekennzeichnet, dass** die Abdeckung (2) mit der Modulaufnahme (1) verbunden ist.

20. Airbagmodul nach Anspruch 19, **dadurch gekennzeichnet, dass** die Abdeckung (2) mit der Modulaufnahme (1) über mindestens einen Verbindungsbereich (3) verbunden ist, der sich von der Abdeckung (2) zu einem Boden (10) der Modulaufnahme (1) erstreckt.

21. Airbagmodul nach Anspruch 18, **dadurch gekennzeichnet, dass** die Abdeckung (2) und die Modulaufnahme (1) über den Verbindungsbereich (3) unter Verwendung von Formschlussmitteln (23, 232) miteinander verbunden sind.

22. Airbagmodul nach Anspruch 19, **dadurch gekennzeichnet, dass** als Formschlussmittel (23,232) Rastelemente dienen.

23. Airbagmodul nach einem der Ansprüche 18 bis 20, **dadurch gekennzeichnet, dass** die Abdeckung (2) und die Modulaufnahme (1) über den Verbindungsbereich (3) unter Verwendung von Schrauben (52) miteinander verbunden sind.

24. Airbagmodul nach einem der Ansprüche 17 bis 21, **dadurch gekennzeichnet, das** die Abdeckung (2) beim Aufblasen des Gassackes (4) mit der Modulaufnahme (1) verbunden bleibt.

25. Airbagmodul nach einem der vorhergehenden Ansprüche, **dadurch gekennzeichnet, dass** sich die Abdeckung (2) beim Aufblasen des Gassackes (4) nicht von dem Airbagmodul löst.

26. Airbagmodul nach einem der vorhergehenden Ansprüche, **dadurch gekennzeichnet, dass** sich die Abdeckung (2) beim Aufblasen des Gassackes (1) wölbt

27. Airbagmodul nach einem der vorhergehenden Ansprüche, **dadurch gekennzeichnet, dass** hinter einer dem Sitzplatz abgewandten inneren Oberfläche (22) der Abdeckung (2) mindestens ein zu einem Packet (45) zusammengepackter Gassackbereich des Gassackes (4) liegt.

28. Airbagmodul nach einem der vorhergehenden Ansprüche, **dadurch gekennzeichnet, dass** hinter der Abdeckung (2) mindestens ein Gassackbereich (45) des zu einem Gassackpaket zusammengepackten Gassackes (4) liegt, der sich beim Aufblasen des Gassackes (4) nur an der Abdeckung (2) vorbei entfalten können, solange diese nicht geöffnet oder zerstört ist.

29. Airbagmodul nach einem der vorhergehenden Ansprüche, **dadurch gekennzeichnet, dass** die Abdeckung (2) zusammen mit der Modulaufnahme (1) einen Modulinnenraum umschließt.

30. Airbagmodul nach Anspruch 29, **dadurch gekennzeichnet, dass** die Abdeckung (2) zusammen mit der Modulaufnahme (1) den Modulinnenraum allseitig umschließt.

31. Airbagmodul nach Anspruch 27 oder 28 und Anspruch 29 oder 30, **dadurch gekennzeichnet, dass** in dem Modulinnenraum mindestens ein zu einem Gassackpaket zusammengepackter Gassackbereich (45) des Gassackes (4) angeordnet ist.

32. Airbagmodul nach einem der vorhergehenden Ansprüche, **dadurch gekennzeichnet, dass** der Gasgenerator (5) an der Modulaufnahme (1) angeordnet ist.

33. Airbagmodul nach einem der Ansprüche 29 bis 31 und Anspruch 32, **dadurch gekennzeichnet, dass** der Gasgenerator (5) im Modulinnenraum angeordnet ist.

34. Airbagmodul nach einem der vorhergehenden Ansprüche, **dadurch gekennzeichnet, dass** das Gassackpaket (45) den Gasgenerator (5) ringförmig umgibt.

35. Airbagmodul nach einem der vorhergehenden Ansprüche, **dadurch gekennzeichnet, dass** das Gassackpaket (45) derart seitlich neben dem Gasgenerator (5) angeordnet ist, dass der Gasgenerator (5) und das Gassackpaket (45) entlang der Abdeckung (2) des Airbagmodules nebeneinander angeordnet sind.

36. Airbagmodul nach einem der vorhergehenden Ansprüche, **dadurch gekennzeichnet, dass** zumindest ein Teil von Ausströmöffnungen (55) des Gasgenerators (5) in Richtung auf zu einem Paket zusammengepackte Gassackbereiche (45) weist.

37. Airbagmodul nach Anspruch 36, **dadurch gekennzeichnet, dass** alle Ausströmöffnungen (55) des Gasgenerators (5) in Richtung auf die zu einem Paket zusammengepackten Gassackbereiche (45) weisen.

38. Airbagmodul nach einem der vorhergehenden Ansprüche, **dadurch gekennzeichnet, dass** die Ausströmöffnungen (55) des Gasgenerators (5) in Richtungen weisen, die sich entlang der Abdeckung (2) des Airbagmodules erstrecken.

39. Airbagmodul nach Anspruch 20 oder einem der Ansprüche 21 bis 38, soweit rückbezogen auf Anspruch 20, **dadurch gekennzeichnet, dass** der Verbindungsbereich (3) den Gasgenerator (5) umgibt und das die zu einem Gassackpaket (45) zusammengepackten Bereiche des Gassackes (4) außerhalb des von dem Verbindungsbereich (3) umschlossenen Raumes angeordnet sind.

40. Gasgenerator nach Anspruch 39, **dadurch gekennzeichnet, dass** im Verbindungsbereich (3) Durchgangsöffnungen (35, 235) vorgesehen sind, durch die hindurch Gas (G) aus dem Gasgenerator (5) in die zu einem Gassackpaket (45) zusammengepackten Bereiche des Gassackes (4) strömen kann.

41. Airbagmodul nach Anspruch 20 oder einem der Ansprüche 21 bis 39, soweit rückbezogen auf Anspruch 20, **dadurch gekennzeichnet, dass** der Verbindungsbereich (3) durch eine Mehrzahl räumlich voneinander beabstandeter Verbindungsabschnitte (130) gebildet wird, die ringförmig um den Gasgenerator (5) herum angeordnet sind.

42. Airbagmodul nach einem der vorhergehenden Ansprüche, **dadurch gekennzeichnet, dass** mindestens eine Seitenwand (12) des Airbagmodules sich quer zur Abdeckung (2) des Airbagmodules erstreckt.

43. Airbagmodul nach Anspruch 42, **dadurch gekennzeichnet, dass** die mindestens eine Seitenwand (12) beim Aufblasen des Gassackes (4) öffenbar ist, so dass sich der Gassack (4) durch die beim Öffnen der Seitenwand (12) freigegebene Öffnung hindurch entfalten kann.

44. Airbagmodul nach Anspruch 43, **dadurch gekenntzeichnet, dass** sich der Gassack (4) entlang der Abdeckung (2) des Airbagmodules durch die beim Öffnen der Seitenwand (12) freigegebene Öffnung hindurch entfalten kann.

45. Airbagmodul nach einem der Ansprüche 42 bis 44, **dadurch gekennzeichnet, dass** die Seitenwand (12) schwenkbar am Airbagmodul angelenkt ist, insbesondere mittels eines Filmscharniers.

46. Airbagmodul nach einem der Ansprüche 42 bis 44, **dadurch gekennzeichnet, dass** die Seitenwand (12) beim Aufblasen des Gassacks (4) zerstörbar ist.

47. Airbagmodul nach einem der Ansprüche 42 bis 46, **dadurch gekennzeichnet, dass** Austrittsöffnungen (55) des Gasgenerators (5) in Richtung auf die mindestens eine Seitenwand (12) des Airbagmodules weisen.

48. Airbagmodul nach einem der vorhergehenden Ansprüche, **dadurch gekennzeichnet, dass** die Abdeckung (2) innerhalb des Gassackes (4) angeordnet ist.

49. Airbagmodul nach einem der vorhergehenden Ansprüche, **dadurch gekennzeichnet, dass** die Abdeckung (2) keine Durchtrittsöffnungen für aus dem Gasgenerator (5) ausströmende Gase aufweist.

50. Airbagmodul nach einem der vorhergehenden Ansprüche, **dadurch gekennzeichnet, dass** die Abdeckung (2) aus einem im Wesentlichen formstabilen Material besteht.

51. Airbagmodul nach einem der vorhergehenden Ansprüche, **dadurch gekennzeichnet, dass** die Abdeckung (2) aus einem substanziell formstabileren Material besteht als der Gassack (4).

52. Airbagmodul nach einem der vorhergehenden Ansprüche, **dadurch gekennzeichnet, dass** der Gasgenerator (5) in den Gassack (4) ragt.

## Claims

1. An airbag module (M) for a motor vehicle, comprising
- an airbag (4) which may be inflated by means of a gas generator (5) for protecting a vehicle occupant located on a seat of a motor vehicle, the airbag comprising an airbag sleeve enclosing an interior of the airbag,
- a module receptacle (1) on which the airbag (4) is accommodated as an airbag package (45),
- a top surface of the airbag module (M), which is arranged in the motor vehicle when the airbag module is installed in accordance with its intended purpose in a motor vehicle, such that the top surface faces the associated seat, and
- a cover (2) of the airbag module extending along the top surface,
**characterized in that**
at least one layer (40), forming a component of the airbag sleeve, of the airbag (4) extends in front of the outer surface (21) of the cover (2) facing the seat and **in that** components (40, 40a) of the airbag module arranged in front of the outer surface (21) of the cover (2), insofar as they are not located between the outer surface (21) of the cover (2) and the at least one airbag layer (40), remain connected to the airbag sleeve during inflation of the airbag (4).

2. The airbag module as claimed in claim 1,
**characterized in that** the airbag (4) is designed and provided to move during inflation in the direction of a vehicle occupant to be protected, who sits on the associated seat as intended.

3. The airbag module as claimed in claim 2,
**characterized in that** all vehicle components (40, 40a) which are located in front of the outer surface (21) of the cover (2) and which have to be moved so that the airbag (4) may be inflated in the direction of the vehicle occupant to be protected, remain connected during inflation of the airbag (4) to the airbag sleeve thereof.

4. The airbag module as claimed in one of claims 1 to 3, **characterized in that** merely the at least one airbag layer (40) is arranged in front of the outer surface (21) of the cover (2) as a component of the airbag module, which forms a component of the airbag sleeve and as a result is permanently connected to the airbag sleeve.

5. The airbag module as claimed in claims 1 to 3, **characterized in that** at least one further material layer (40a) consisting of a flexible material is arranged in front of the outer surface (21) of the cover (2) additionally to the at least one airbag layer (40), which is connected to the airbag sleeve and remains connected to the airbag sleeve during inflation of the airbag (4).

6. The airbag module as claimed in claim 5,
**characterized in that** the further material layer (40a) is connected to the at least one airbag layer (40) and during inflation of the airbag (4) permanently rests flat against said airbag.

7. The airbag module as claimed in claim 5 or 6, **characterized in that** the further material layer (40a) is connected to the at least one airbag layer (40) such that the further material layer (40a) moves during inflation of the airbag (4) together with the at least one airbag layer (40).

8. The airbag module as claimed in one of claims 5 to 7, **characterized in that** the further material layer (40a) is arranged in front of the surface of the at least one airbag layer (40) remote from the cover (2).

9. The airbag module as claimed in one of claims 5 to 8, **characterized in that** the further material layer (40a) is configured as a material layer separate from the airbag layer (40) which is connected to the airbag layer (40).

10. The airbag module as claimed in claim 9,
**characterized in that** the further material layer (40a) is connected by an adhesive to the airbag layer (40).

11. The airbag module as claimed in one of claims 5 to 10, **characterized in that** the further material layer (40a) consists of leather, woven fabric, plastics, foamed material or metal.

12. The airbag module as claimed in one of claims 5 to 8, **characterized in that** the further material layer (40a) is applied chemically or physically to the airbag layer (40).

13. The airbag module as claimed in claim 12,
**characterized in that** the further material layer (40a) is configured as a color coating, as a foamed material layer, as a metal or rubber coating or as a printed layer.

14. The airbag module as claimed in one of the preceding claims, **characterized in that** just one airbag layer (40) extends in front of the outer surface (21) of the cover (2).

15. The airbag module as claimed in one of the preceding claims, **characterized in that** the at least one airbag layer (40) bears against the outer surface (21) of the cover (2).

16. The airbag module as claimed in one of the preceding claims, **characterized in that** the at least one airbag layer (40) is releasably fixed to the cover (2).

17. The airbag module as claimed in claim 16,
**characterized in that** an adhesive is used for the releasable fixing of the at least one airbag layer (40) to the cover (2).

18. The airbag module as claimed in one of the preceding claims, **characterized in that** in front of the surface of the airbag layer (40) remote from the cover (2) which extends along the cover (2), no components of the airbag module are located which might have to be opened during inflation of the airbag (4), in order to allow a movement of the at least one airbag layer (40) in the direction of the seat.

19. The airbag module as claimed in one of the preceding claims, **characterized in that** the cover (2) is connected to the module receptacle (1).

20. The airbag module as claimed in claim 19,
**characterized in that** the cover (2) is connected to the module receptacle (1) via at least one connection region (3), which extends from the cover (2) to a base (10) of the module receptacle (1).

21. The airbag module as claimed in claim 18,
**characterized in that** the cover (2) and the module receptacle (1) are connected to one another via the connection region (3) by the use of positive connection means (23, 232).

22. The airbag module as claimed in claim 19,
**characterized in that** latching elements are used as positive connection means (23, 232).

23. The airbag module as claimed in one of claims 18 to 20, **characterized in that** the cover (2) and the module receptacle (1) are connected to one another via the connection region (3) by using screws (52).

24. The airbag module as claimed in one of claims 17 to 21, **characterized in that** the cover (2) remains connected to the module receptacle (1) during inflation of the airbag (4).

25. The airbag module as claimed in one of the preceding claims, **characterized in that** the cover (2) is not released from the airbag module during inflation of the airbag (4).

26. The airbag module as claimed in one of the preceding claims, **characterized in that** the cover (2) bulges during inflation of the airbag (1).

27. The airbag module as claimed in one of the preceding claims, **characterized in that** at least one airbag region of the airbag (4) packed together to form a package (45) is located behind an inner surface (22) of the cover (2) remote from the seat.

28. The airbag module as claimed in one of the preceding claims, **characterized in that** at least one airbag region (45) of the airbag (4) packed together to form an airbag package is located behind the cover (2), which airbag region during inflation of the airbag (4) may only be deployed past the cover (2) provided said cover is not open or destroyed.

29. The airbag module as claimed in one of the preceding claims, **characterized in that** the cover (2) together with the module receptacle (1) encloses a module interior.

30. The airbag module as claimed in claim 29,
**characterized in that** the cover (2) together with the module receptacle (1) encloses the module interior on all sides.

31. The airbag module as claimed in claim 27 or 28 and claim 29 or 30, **characterized in that** at least one airbag region (45) of the airbag (4) packed together to form an airbag package is arranged in the module interior.

32. The airbag module as claimed in one of the preceding claims, **characterized in that** the gas generator (5) is arranged on the module receptacle (1).

33. The airbag module as claimed in one of claims 29 to 31 and claim 32, **characterized in that** the gas generator (5) is arranged in the module interior.

34. The airbag module as claimed in one of the preceding claims, **characterized in that** the airbag package (45) surrounds the gas generator (5) in an annular manner.

35. The airbag module as claimed in one of the preceding claims, **characterized in that** the airbag package (45) is arranged at the side, adjacent to the gas generator (5) such that the gas generator (5) and the airbag package (45) are arranged adjacent to one another along the cover (2) of the airbag module.

36. The airbag module as claimed in one of the preceding claims, **characterized in that** at least one portion of the discharge apertures (55) of the gas generator (5) faces in the direction of airbag regions (45) packed together to form a package.

37. The airbag module as claimed in claim 36,
**characterized in that** all discharge apertures (55) of the gas generator (5) face in the direction of the airbag regions (45) packed together to form a package.

38. The airbag module as claimed in one of the preceding claims, **characterized in that** the discharge apertures (55) of the gas generator (5) face in directions which extend along the cover (2) of the airbag module.

39. The airbag module as claimed in claim 20 or one of claims 21 to 38, referring back to claim 20,
**characterized in that** the connection region (3) surrounds the gas generator (5) and **in that** the regions of the airbag (4) packed together to form an airbag package (45) are arranged outside the space enclosed by the connection region (3).

40. The airbag module as claimed in claim 39,
**characterized in that** in the connection region (3) through-openings (35, 235) are provided through which gas (G) may flow out of the gas generator (5) into the regions of the airbag (4) packed together to form an airbag package (45).

41. The airbag module as claimed in claim 20 or one of claims 21 to 39, referring back to claim 20,
**characterized in that** the connection region (3) is formed by a plurality of connecting portions (130) spaced apart from one another which are arranged in an annular manner around the gas generator (5).

42. The airbag module as claimed in one of the preceding claims, **characterized in that** at least one side wall (12) of the airbag module extends transversely to the cover (2) of the airbag module.

43. The airbag module as claimed in claim 42,
**characterized in that** the at least one side wall (12) may be opened during inflation of the airbag (4), so that the airbag (4) may be deployed through the aperture which is opened up when opening the side wall (12).

44. The airbag module as claimed in claim 43,
**characterized in that** the airbag (4) may be deployed along the cover (2) of the airbag module through the aperture which is opened up when opening the side wall (12).

45. The airbag module as claimed in one of claims 42 to 44, **characterized in that** the side wall (12) is articulated pivotably on the airbag module, in particular by means of a film hinge.

46. The airbag module as claimed in one of claims 42 to 44, **characterized in that** the side wall (12) may be destroyed during inflation of the airbag (4).

47. The airbag module as claimed in one of claims 42 to 46, **characterized in that** discharge apertures (55) of the gas generator (5) face in the direction of the at least one side wall (12) of the airbag module.

48. The airbag module as claimed in one of the preceding claims, **characterized in that** the cover (2) is arranged inside the airbag (4).

49. The airbag module as claimed in one of the preceding claims, **characterized in that** the cover (2) has no through-openings for gases flowing out of the gas generator (5).

50. The airbag module as claimed in one of the preceding claims, **characterized in that** the cover (2) consists of a substantially dimensionally stable material.

51. The airbag module as claimed in one of the preceding claims, **characterized in that** the cover (2) consists of a substantially more dimensionally stable material than the airbag (4).

52. The airbag module as claimed in one of the preceding claims, **characterized in that** the gas generator (5) projects into the airbag (4).

## Revendications

1. Module d'airbag (M) pour un véhicule automobile, comprenant
- un coussin à gaz (4) gonflable au moyen d'un générateur de gaz (5) pour la protection d'un occupant du véhicule qui se trouve sur une place assise dudit véhicule, le coussin comprenant une enveloppe de coussin à gaz qui enferme un volume intérieur du coussin à gaz,
- un logement de module (1) dans lequel le coussin à gaz (4) est logé sous forme de paquet de coussin à gaz (45),
- une surface de couverture du module d'airbag (M) qui, lors de l'intégration normale du module d'airbag dans un véhicule automobile, est agencée dans le véhicule automobile de telle façon que la surface de couverture est tournée vers la place assise associée, et
- un recouvrement (2) du module d'airbag, qui s'étend le long de la surface de couverture,
**caractérisé en ce que**
au moins une couche (40) du coussin à gaz (4), qui forme une partie de l'enveloppe de coussin à gaz, s'étend devant la surface extérieure (21), tournée vers la place assise, du recouvrement (2), et **en ce que** des composants (40, 40a) du module d'airbag agencés devant la surface extérieure (21) du recouvrement (2), dans la mesure où ils ne sont pas situés entre la surface extérieure (21) du recouvrement (2) et ladite au moins une couche (40) du coussin à gaz, restent reliés à l'enveloppe de coussin à gaz lors du gonflage du coussin à gaz (4).

2. Module d'airbag selon la revendication 1, **caractérisé en ce que** le coussin à gaz (4) est conçu et prévu pour se déplacer, lors du gonflage, en direction d'un occupant du véhicule qu'il s'agit de protéger, lequel est assis sur la place assise associée, de manière normale.

3. Module d'airbag selon la revendication 2, **caractérisé en ce que** la totalité des composants du véhicule (40, 40a), qui se trouvent devant la surface extérieure (21) du recouvrement (2) et qui doivent être déplacés afin que le coussin à gaz (4) puisse être gonflé en direction de l'occupant du véhicule qu'il s'agit de protéger, restent reliés à leur enveloppe du coussin à gaz (4) lors du gonflage de celui-ci.

4. Module d'airbag selon l'une des revendications 1 à 3, **caractérisé en ce que** seule ladite au moins une couche (40) de coussin à gaz, qui forme une partie de l'enveloppe du coussin à gaz et est ainsi durablement reliée à l'enveloppe de coussin à gaz, est agencée devant la surface extérieure (21) du recouvrement (2) à titre de composant du module d'airbag.

5. Module d'airbag selon les revendications 1 à 3, **caractérisé en ce que**, devant la surface extérieure (21) du recouvrement (2), additionnellement à ladite au moins une couche de coussin à gaz (40), il est prévu au moins une autre couche de matériau (40a) formée d'un matériau flexible, qui est reliée à l'enveloppe de coussin à gaz et qui reste reliée à l'enveloppe de coussin à gaz lors du gonflage du coussin à gaz (4).

6. Module d'airbag selon la revendication 5, **caractérisé en ce que** l'autre couche de matériau (40a) est reliée à ladite au moins une couche de coussin à gaz (40) et s'applique de façon durable à plat lors du gonflage du coussin à gaz (4).

7. Module d'airbag selon la revendication 5 ou 6, **caractérisé en ce que** l'autre couche de matériau (40a) est reliée à ladite au moins une couche de coussin à gaz (40) de telle manière que l'autre couche de matériau (40a) se déplace conjointement avec ladite au moins une couche de coussin à gaz (40) lors du gonflage du coussin à gaz (4).

8. Module d'airbag selon les revendications 5 à 7, **caractérisé en ce que** l'autre couche de matériau (40a) est agencée devant la surface de ladite au moins une couche de coussin à gaz (40) qui est orientée à l'opposé du recouvrement (2).

9. Module d'airbag selon l'une des revendications 5 à 8, **caractérisé en ce que** l'autre couche de matériau (40a) est réalisée comme une couche de matériau qui est séparée de la couche de coussin à gaz (40) et qui est reliée à la couche de coussin à gaz (40).

10. Module d'airbag selon la revendication 9, **caractérisé en ce que** l'autre couche de matériau (40a) est reliée à la couche de coussin à gaz (40) par un adhésif.

11. Module d'airbag selon l'une des revendications 5 à 10, **caractérisé en ce que** l'autre couche de matériau (40a) est en cuivre, textile, matière plastique, mousse ou métal.

12. Module d'airbag selon l'une des revendications 5 à 8, **caractérisé en ce que** l'autre couche de matériau (40a) est appliquée, à titre de couche de matériau, par voie chimique ou physique sur la couche de coussin à gaz (40).

13. Module d'airbag selon la revendication 12, **caractérisé en ce que** l'autre couche de matériau (40a) est réalisée sous forme de couche colorée, de couche de mousse, d'un revêtement métallique ou en caoutchouc, ou d'une impression.

14. Module d'airbag selon l'une des revendications précédentes, **caractérisé en ce qu'**exactement une couche de coussin à gaz (40) s'étend devant la surface extérieure (21) du recouvrement (2).

15. Module d'airbag selon l'une des revendications précédentes, **caractérisé en ce que** ladite au moins une couche de coussin à gaz (40) se trouve sur la surface extérieure (21) du recouvrement (2).

16. Module d'airbag selon l'une des revendications précédentes, **caractérisé en ce que** ladite au moins une couche de coussin à gaz (40) est fixée de manière détachable sur le recouvrement (2).

17. Module d'airbag selon la revendication 16, **caractérisé en ce qu'**un adhésif sert à la fixation détachable de ladite au moins une couche de coussin à gaz (40) sur le recouvrement (2).

18. Module d'airbag selon l'une des revendications précédentes, **caractérisé en ce que**, devant la surface de la couche de coussin à gaz (40) qui est orientée à l'opposé du recouvrement (2) et qui s'étend le long du recouvrement (2), il n'existe aucun composant du module d'airbag qui devrait être ouvert lors du gonflage du coussin à gaz (4) pour permettre un mouvement de ladite au moins une couche de coussin à gaz (40) en direction de la place assise.

19. Module d'airbag selon l'une des revendications précédentes, **caractérisé en ce que** le recouvrement (2) est reliée au logement de module (1).

20. Module d'airbag selon la revendication 19, **caractérisé en ce que** le recouvrement (2) est relié au logement de module (1) via au moins une zone de liaison (3) qui s'étend depuis le recouvrement (2) jusqu'à un fond (10) du logement de module (1).

21. Module d'airbag selon la revendication 18, **caractérisé en ce que** le recouvrement (2) et le logement de module (1) sont reliés l'un à l'autre via la zone de liaison (3) en utilisant des moyens à coopération de formes (23, 232).

22. Module d'airbag selon la revendication 19, **caractérisé en ce que** des éléments à enclenchement servent de moyens à coopération de formes (23,232).

23. Module d'airbag selon l'une des revendications de 18 à 20, **caractérisé en ce que** le recouvrement (2) et le logement de module (1) sont reliés l'un à l'autre via la zone de liaison (3) en utilisant des vis (52).

24. Module d'airbag selon l'une des revendications 17 à 21, **caractérisé en ce que** le recouvrement (2) reste relié au logement de module (1) lors du gonflage du coussin à gaz (4).

25. Module d'airbag selon l'une des revendications 17 à 21, **caractérisé en ce que** le recouvrement (2) ne se détache pas du module d'airbag lors du gonflage du coussin à gaz (4).

26. Module d'airbag selon l'une des revendications précédentes, **caractérisé en ce que** le recouvrement (2) se bombe lors du gonflage du coussin à gaz (1).

27. Module d'airbag selon l'une des revendications précédentes, **caractérisé en ce qu'**au moins une zone de coussin à gaz du coussin à gaz (4), regroupée pour former un paquet (45), est située derrière une surface intérieure (22) du recouvrement (2) orientée à l'opposé de la place assise.

28. Module d'airbag selon l'une des revendications précédentes, **caractérisé en ce que**, derrière le recouvrement (2), se trouve au moins une zone de coussin à gaz (45) du coussin à gaz (4) regroupée pour former un paquet de coussin à gaz, qui peut se déployer lors du gonflage du coussin à gaz (4), uniquement le long du recouvrement (2), lorsque celui-ci n'est pas ouvert ou détruit.

29. Module d'airbag selon l'une des revendications précédentes, **caractérisé en ce que** le recouvrement (2) entoure, conjointement avec le logement de module (1), une chambre intérieure de module.

30. Module d'airbag selon la revendication 29, **caractérisé en ce que** le recouvrement (2) entoure, conjointement avec le logement de module (1), la chambre intérieure de module sur tous les côtés.

31. Module d'airbag selon la revendication 27 ou 28, et selon la revendication 29 ou 30, **caractérisé en ce qu'**au moins une zone de coussin à gaz (45) du coussin à gaz (4) regroupée pour former un paquet de coussin à gaz est agencée dans la chambre intérieure du module.

32. Module d'airbag selon l'une des revendications précédentes, **caractérisé en ce que** le générateur de gaz (5) est agencé sur le logement de module (1).

33. Module d'airbag selon l'une des revendications 29 à 31 et selon la revendication 32, **caractérisé en ce que** le générateur de gaz (5) est agencé dans la chambre intérieure du module.

34. Module d'airbag selon l'une des revendications précédentes, **caractérisé en ce que** le paquet de coussin à gaz (45) entoure le générateur de gaz (5) sous forme annulaire.

35. Module d'airbag selon l'une des revendications précédentes, **caractérisé en ce que** le paquet de coussin à gaz (45) est agencé latéralement à côté du générateur de gaz (5) de telle manière que le générateur de gaz (5) et le paquet de coussin à gaz (45) sont agencés l'un à côté de l'autre le long du recouvrement (2) du module d'airbag.

36. Module d'airbag selon l'une des revendications précédentes, **caractérisé en ce qu'**au moins une partie des ouvertures d'échappement (55) du générateur de gaz (5) sont dirigées en direction de zones (45) de coussin à gaz regroupées pour former un paquet.

37. Module d'airbag selon la revendication 36, **caractérisé en ce que** toutes les ouvertures d'échappement (55) du générateur de gaz (5) sont dirigées en direction des zones (45) de coussin à gaz regroupées pour former un paquet.

38. Module d'airbag selon l'une des revendications précédentes, **caractérisé en ce que** les ouvertures d'échappement (55) du générateur de gaz (5) sont dirigées dans des directions qui s'étendent le long du recouvrement (2) du module d'airbag.

39. Module d'airbag selon la revendication 20, ou selon l'une des revendications 21 à 38 prise en dépendance de la revendication 20,
**caractérisé en ce que** la zone de liaison (3) entoure le générateur de gaz (5), et **en ce que** les zones du coussin à gaz (4) regroupées pour former un paquet (45) de coussin à gaz sont agencées à l'extérieur du volume enfermé par la zone de liaison (3).

40. Générateur de gaz selon la revendication 39, **caractérisé en ce que** dans la zone de liaison (3) sont prévues des ouvertures traversantes (35, 235) à travers lesquelles du gaz (G) peut s'écouler hors du générateur de gaz (5) jusque dans les zones du coussin à gaz (4) qui sont regroupées pour former un paquet de coussin à gaz (45).

41. Module d'airbag selon la revendication 20, ou selon l'une des revendications 21 à 39 prise en dépendance de la revendication 20, **caractérisé en ce que** la zone de liaison (3) est formée par une pluralité de tronçons de liaison (130) écartés les uns des autres dans l'espace, qui sont agencés sous forme annulaire tout autour du générateur de gaz (5).

42. Module d'airbag selon l'une des revendications précédentes, **caractérisé en ce qu'**au moins une paroi latérale (12) du module d'airbag s'étend perpendiculairement au recouvrement (2) du module d'airbag.

43. Module d'airbag selon la revendication 42, **caractérisé en ce que** ladite au moins une paroi latérale (12) est capable de s'ouvrir lors du gonflage du coussin à gaz (4) de telle manière que le coussin à gaz (4) peut se déployer à travers l'ouverture libérée lors de l'ouverture de la paroi latérale (12).

44. Module d'airbag selon la revendication 43, **caractérisé en ce que** le coussin à gaz (4) peut se déployer le long du recouvrement (2) du module d'airbag en traversant l'ouverture libérée lors de l'ouverture de la paroi latérale (12).

45. Module d'airbag selon l'une des revendications 42 à 44, **caractérisé en ce que** la paroi latérale (12) est articulée en pivotement sur le module d'airbag, en particulier au moyen d'une charnière à film.

46. Module d'airbag selon l'une des revendications 42 à 44, **caractérisé en ce que** la paroi latérale (12) est destructible lors du gonflage du coussin à gaz (4).

47. Module d'airbag selon l'une des revendications 42 à 46, **caractérisé en ce que** des ouvertures de sortie (55) du générateur de gaz (5) sont dirigées en direction de ladite au moins une paroi latérale (12) du module d'airbag.

48. Module d'airbag selon l'une des revendications précédentes, **caractérisé en ce que** le recouvrement (2) est agencé à l'intérieur du coussin à gaz (4).

49. Module d'airbag selon l'une des revendications précédentes, **caractérisé en ce que** le recouvrement (2) ne présente aucune ouverture traversante pour les gaz qui s'écoulent en sortant du générateur de gaz (5).

50. Module d'airbag selon l'une des revendications précédentes, **caractérisé en ce que** le recouvrement (2) est en un matériau sensiblement stable quant à sa forme.

51. Module d'airbag selon l'une des revendications précédentes, **caractérisé en ce que** le recouvrement (2) et en un matériau sensiblement plus stable quant à sa forme que le coussin à gaz (4).

52. Module d'airbag selon l'une des revendications précédentes, **caractérisé en ce que** le générateur de gaz (5) pénètre dans le coussin à gaz (4).
